# EUROPÄISCHE PATENTANMELDUNG

(11) **EP 4 480 612 A1**
(43) Veröffentlichungstag der Anmeldung: **25.12.2024**
(21) Anmeldenummer: 24182502.5
(22) Anmeldetag: 17.06.2024
(51) Int. Cl.: B23C 3/35, G06Q 50/04

(54) **VERFAHREN ZUR AUFNAHME DER OBERFLÄCHE EINES SCHLÜSSEL**

(30) Priorität: 19.06.2023 DE 102023115991
(71) Anmelder: Bosch, Karl-Heinz, 07180 Santa Ponsa (ES)
(72) Erfinder: Bosch, Karl-Heinz, 07180 Santa Ponsa (ES)
(74) Vertreter: Patentanwälte und Rechtsanwalt Weiß, Arat & Partner mbB

(57) **Zusammenfassung**

Bei einem Verfahren zur Aufnahme der Oberfläche eines Schlüssels (10), sollen die folgenden Schritte:
- Abspielen von Anleitungs-Videosequenzen auf dem Display (33) eines Aufnahmegerätes (30)
- Anzeigen von Positionierungsgrafiken (32, 32", 32‴, 32ʺʺ) auf dem Display (33) des Aufnahmegerätes (30)
- Ausrichten des Schlüssels (10), des Referenzhilfsobjektes (20), des Fixierhilfsobjektes (40, 42), des Schließzylinders (25), des Aufnahmegerätes (30)
- Aufnahme der Oberfläche des Schlüssels (10), des Referenzhilfsobjektes (20), des Fixierhilfsobjektes (40, 42), des

Schließzylinders (25) durch die Kamera (31) des Aufnahmegerätes (30) ausgeführt werden.

## Beschreibung

Die vorliegende Erfindung betrifft ein Verfahren nach den Merkmalen des Oberbegriffs des Anspruchs 1.

### Stand der Technik

Wenn man eine Kopie eines Schlüssels benötigt, muss man mit dem Originalschlüssel zu einem Schlüsseldienst gehen. Dort wird der Originalschlüssel in Kopierfräsmaschinen mechanisch abgetastet und die abgetastete Kontur, in Form von Einschnitten oder Bohrmulden, in einen Schlüsselrohling mit vorgefertigtem Profil gefräst. Auch ist es möglich, das Profil des Schlüssels mechanisch abzutasten und in ein Halbzeug zu Fräsen.

Nachteilig an diesem Verfahren, nach heutigem Stand der Technik, ist es, dass man immer mit einem Originalschlüssel zu dem Schlüsseldienst fahren muss. Das benötigt Zeit und belastet die Umwelt. Zudem kann dort der Schlüssel nur dann kopiert werden, wenn ein Rohling mit entsprechendem Profil, oder eine Profilfräsmaschine vorhanden ist.

Ein weiteres Verfahren, nach heutigem Stand der Technik, betrifft den großen Bedarf an Schlüsselkopien für Schließanlagen, zum Beispiel für Mietwohnungen. Schlüsselkopien für solche Schließanlagen können nur direkt beim Hersteller der Schließanlage bestellt werden. Dieser verlangt dafür die Vorlage einer Plastik-Bestellkarte die er "Sicherungskarte" nennt. Diese Plastik-Bestellkarte besitzt in der Regel die Hausverwaltung.

Nachteilig an diesem Verfahren ist es, dass Mieter für ihre Mietwohnung keine Ersatzschlüssel auf dem freien Markt erwerben können, weil sie die Plastik-Bestellkarte nicht besitzen. Ersatzschlüssel für Mietwohnungen sind deshalb sehr teuer, weil der Zylinderhersteller den monopolisierten Preis bestimmen kann, und die Hausverwaltung oft zusätzliche Gebühren aufschlägt.

### Aufgabe der Erfindung

Aufgabe der vorliegenden Erfindung ist es, die vorgenannten Nachteile zu beseitigen und eine Möglichkeit zu schaffen, Ersatzschlüssel bequem von zu Hause aus zu bestellen, ohne mit dem Originalschlüssel zu einem Schlüsseldienst fahren zu müssen. Auch soll es mit der vorliegenden Erfindung möglich sein, Ersatzschlüssel für Schließanlagen bequem von zu Hause aus zu bestellen, ohne die Plastik-Bestellkarte vorlegen zu müssen, um es, zum Beispiel Mietern, zu ermöglichen, monopolfrei an günstige Ersatzschlüssel zu gelangen.

### Lösung der Aufgabe

Zur Lösung der Aufgabe führen die Merkmale des kennzeichnenden Teils des Anspruchs 1.

Bei einem erfindungsgemäßen Verfahren werden auf dem Display eines Aufnahmegerätes, vorzugsweise einem Smartphone, Anleitungs-Video/Bildsequenzen abgespielt, die dem Anwender erklären in welcher Weise er seinen Originalschlüssel auf einem Referenzhilfsobjekt, beispielsweise einem Geldschein positioniert. Zudem zeigen die Anleitungen, wie der Anwender seinen Schlüssel mittels eines Fixierhilfsobjektes, vorzugsweise eine Klopapierrolle, lagerichtig fixieren kann. Im nächsten Schritt wird auf dem Display eine halbtransparente Positionierungsgrafik angezeigt, die die Bildvorschau der in dem Aufnahmegerät eingebauten Kamera überlagert. Auf dieser Positionierungsgrafik sind schemenhaft die Umrisse eines fiktiven Schlüssels, Referenzhilfsobjektes und Fixierhilfsobjektes abgebildet. Nun kann der Anwender ganz einfach die Position und den Abstand sein Aufnahmegerätes so verändern, bis sich die Umrisse der Positionierungsgrafik mit der Bildvorschau decken. Dadurch erhält die Kamera die optimale Position und Abstand zu dem Schlüssel. Der Anwender kann nun manuell Fotos/Videos auslösen, oder die im Aufnahmegerät verbauten Sensoren lösen die Bildaufnahme automatisch aus. Danach wiederholt sich der ganze Vorgang um die anderen Seiten des Schlüssels aufzunehmen. Die Ablichtung kann hierbei jeweils mittels einzelner Bilder, Bildserien und/oder Videos erfolgen. Zudem können weitere Daten der Sensoren, die üblicherweise in Smartphones verbaut sind, ermittelt/gesammelt werden. Die daraus resultierenden Bilder/Videos/Daten werden dann mittels allgemeiner Datenübertragung, zum Beispiel über das Internet, an eine Verarbeitungsstelle übertragen, um dort aus diesen Daten ein 3D-Objekt des Schlüssels zu erzeugen, das dazu verwendet werden kann Schlüsselkopien herzustellen.

### Figurenbeschreibung

Weitere Vorteile, Merkmale und Einzelheiten der Erfindung ergeben sich aus der Nachfolgenden Beschreibung bevorzugter Ausführungsbeispiele sowie anhand der Zeichnung.

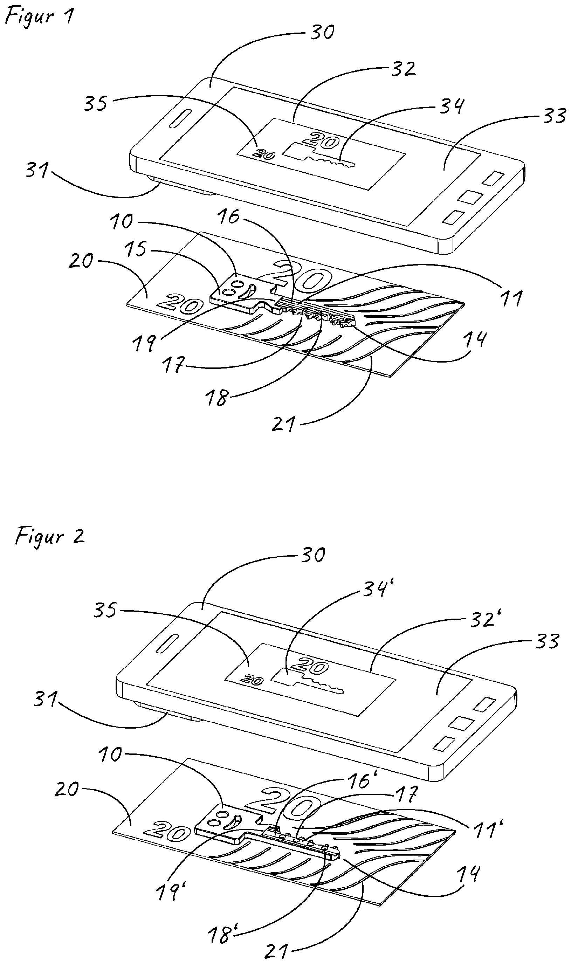

Figur 1 zeigt, in einer Ansicht schräg von Oben, den Schlüssel 10, mit seiner Schlüsselseite 11 nach oben zeigend. Zu sehen sind die Schlüsselspitze 14, Schlüsselprofil 16, Schlüsselzacken 17, Schlüsselbohrmulden 18, Schlüsselprofilanschnitt 19. Das Referenzhilfsobjekt 20, mit Aufdruck 21 wird hier beispielsweise durch eine Banknote gebildet. Das Aufnahmegerät 30, beispielsweise ein Smartphone, enthält ein Display 33, das eine Positionierungsgrafik 32 mit Schlüsselgrafik 34 und Referenzhilfsobjektgrafik 35 zeigt. An der Unterseite des Aufnahmegerätes 30 ist eine Kamera 31 angeordnet.
Figur 2 zeigt, in einer Ansicht schräg von Oben, den Schlüssel 10, mit seiner Schlüsselseite 11' nach oben zeigend. Zu sehen sind die Schlüsselspitze 14, Schlüsselprofil 16', Schlüsselzacken 17, Schlüsselbohrmulden 18', Schlüsselprofilanschnitt 19'. Das Referenzhilfsobjekt 20, mit Aufdruck 21 wird hier beispielsweise durch eine Banknote gebildet. Das Aufnahmegerät 30, beispielsweise ein Smartphone, enthält ein Display 33, das eine Positionierungsgrafik 32` mit Schlüsselgrafik 34' und Referenzhilfsobjektgrafik 35 zeigt. An der Unterseite des Aufnahmegerätes 30 ist eine Kamera 31 angeordnet.

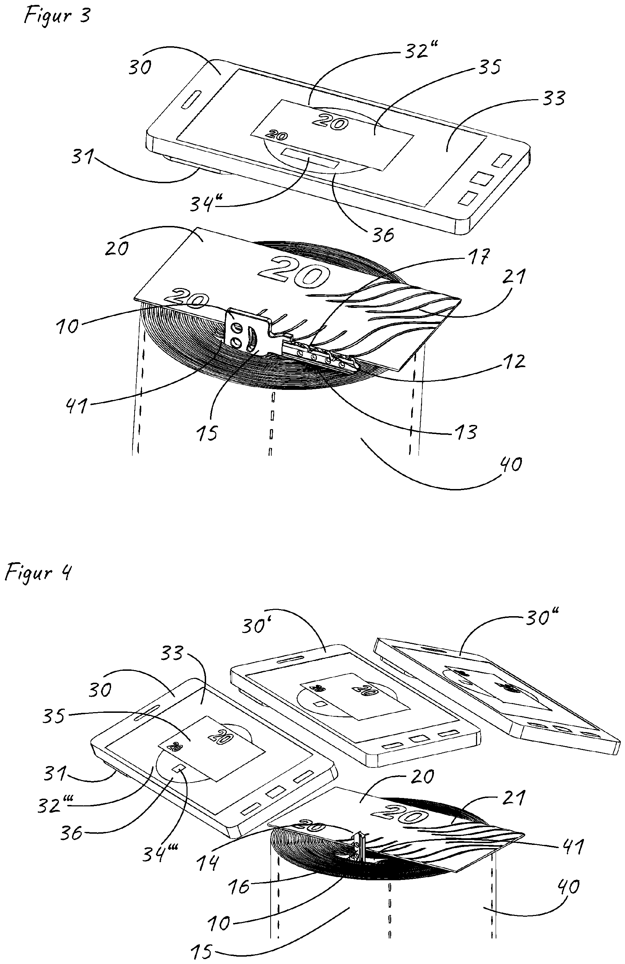

Figur 3 zeigt, in einer Ansicht schräg von Oben, den Schlüssel 10, mit den auf der Schlüsselbrust 12 sitzenden Schlüsselzacken 17. Der Schlüsselrücken 13 liegt auf dem Fixierhilfsobjekt 40, beispielshaft gebildet aus einer Klopapierrolle, auf, wobei der Schlüsselkopf 15 in der Blattlücke 41 steckt. Das Referenzhilfsobjekt 20 mit dem Aufdruck 21 liegt auf dem Fixierhilfsobjekt 40. Das Aufnahmegerät 30 hat auf der Unterseite eine Kamera 31. Auf dem Display 33 ist eine Positionierungsgrafik 32" zu sehen. Diese zeigt eine Schlüsselgrafik 34", eine Referenzhilfsobjektgrafik 35, und eine Fixierhilfsobjektgrafik 36.
Figur 4 zeigt, in einer Ansicht schräg von Oben, den Schlüssel 10 mit der Schlüsselspitze 14 und dem Schlüsselprofil 16. Der Schlüsselkopf 15 ist vollständig in die Blattlücke 41 des Fixierhilfsobjektes 40 versenkt. Das Referenzhilfsobjekt 20 trägt einen Aufdruck 21. Das Aufnahmegerät 30 mit der Kamera 31 ist in zwei weiteren Positionierungen 30' und 30" dargestellt. Die Positionierungsgrafik 32‴ zeigt die Fixierhilfsobjektgrafik 36 und die Schlüsselgrafik34‴.

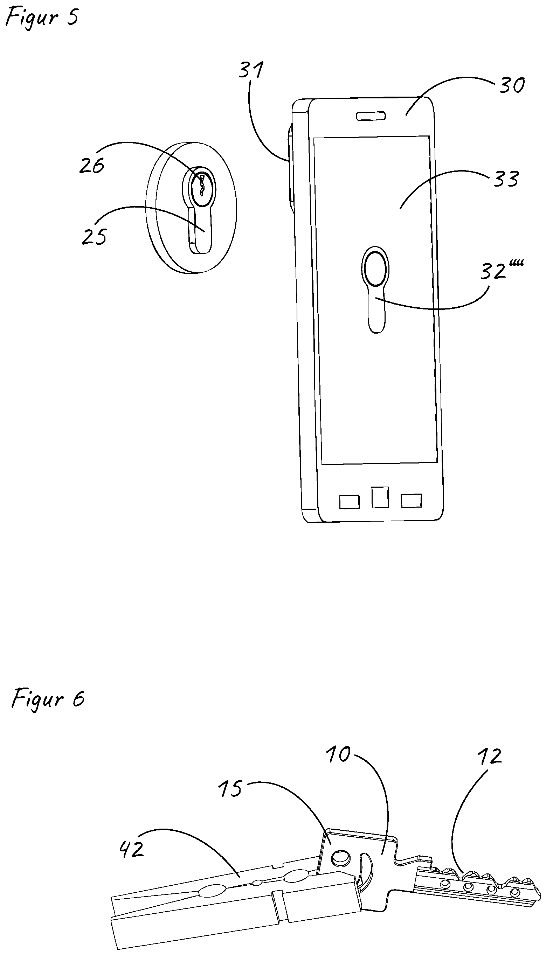

Figur 5 zeigt, in einer Ansicht schräg von Vorn, einen Schließzylinder 25 mit dem Zylinderprofil 26. Das Aufnahmegerät 30 mit der Kamera 31 zeigt auf dem Display 33 die Positionierungsgrafik 32"".
Figur 6 zeigt den Schlüssel 10 mit dem Schlüsselkopf 15 und der Schlüsselbrust 12. Das Fixierhilfsobjekt 42 besteht hier beispielhaft aus einer Wäscheklammer.

### Ausführungsbeispiel

Die Funktionsweise der vorliegenden Erfindung ist folgende:
Um eine Schlüsselkopie online zu bestellen, ohne den Originalschlüssel einzuschicken ist es notwendig, die Oberfläche des Originalschlüssels, vorzugsweise von allen Seiten, aufzunehmen. Um die verschiedenen Schritte dieses Verfahrens für den Kunden einfach zu gestalten, kann er eine App auf sein Aufnahmegerät, vorzugsweise ein Smartphone oder ein Tablet installieren, oder über den Internetbrowser eine Anwendung starten.

Für den ersten Schritt des erfindungsgemäßen Verfahrens wird auf dem Display 33 eines Aufnahmegerätes 30, vorzugsweise ein Smartphone oder Tablet, eine animierte Anleitungs-Videosequenz abgespielt, auf der zu sehen ist, wie ein Referenzhilfsobjekt 20, hier beispielhaft durch einen Geldschein abgebildet, und der Schlüssel 10 positioniert werden. Am Ende der Anleitungs-Videosequenz erscheint, wie in Figur 1 gezeigt, auf dem Display 33 eine halbtransparente Positionierungsgrafik 32 zusammen mit der Bildvorschau der Kamera 31. Die Umrisse der Positionierungsgrafik 32 überlagern hierbei die Bildvorschau der Kamera 31. So ist es auf einfache Weise möglich, das Aufnahmegerät 30 in seiner Lage und Abstand so zu verändern bis sich der Umriss des Referenzhilfsobjektes 20 mit der Referenzhilfsobjektgrafik 35 deckt, und der Schlüssel 10 sich mit der Schlüsselgrafik 34 deckt. Nun befindet sich das Aufnahmegerät 30 in optimaler Position und der Anwender kann ein oder mehrere Fotos und oder Videos von dem Schlüssel 10 mitsamt dem Referenzhilfsobjekt 20 machen. Denkbar ist auch, dass die im Aufnahmegerät 30 verbaute Sensorik die optimale Positionierung erkennt und vollautomatisch die Kamera 31 auslöst. Auf diesen Fotos und Videos sind nun in optimaler Qualität und Größe der Schlüssel 10, die Schlüsselseite 11, die Schlüsselspitze 14, der Schlüsselkopf 15, das Schlüsselprofil 16, die Schlüsselzacken 17, die Schlüsselbohrmulden 18 und der Schlüsselprofilanschnitt 19 abgebildet. Zudem ist das Referenzhilfsobjekt 20 mit seinem Aufdruck 21 auf den Aufnahmen abgebildet. Da die Größe des allgemeinüblichen Referenzhilfsobjektes 20 und seines Aufdrucks 21, hier vorzugsweise ein Geldschein, exakt bekannt sind, lassen sich später die Aufnahmen auf einfache Weise auf ihre Realgröße skalieren. Der auf den Aufnahmen abgebildete Schlüssel 10 ist danach automatisch auch in Realgröße abgebildet. Da der Schlüssel 10 in der Mitte des Referenzhilfsobjektes 20 positioniert ist, verdeckt er Teile des Aufdruckes 21. Dadurch lassen sich die Schlüsselzacken 17 besonders exakt bestimmen, denn der fein gerasterte Aufdruck 21 ist auf den Aufnahmen genau dort verdeckt, wo die Schlüsselzacken 17 verlaufen. So kann auf einfache Weise die Position und Größe aller Oberflächenmerkmale des Schlüssels ermittelt werden.

Im zweiten Schritt des erfindungsgemäßen Verfahrens zeigt eine animierte Anleitungs-Videosequenz auf dem Display 33 des Aufnahmegerätes 30, wie der Schlüssel auf seine zweite Seite umgedreht wird. Figur 2 zeigt die halbtransparente Positionierungsgrafik 32` mit der Referenzhilfsobjektgrafik 35 und der Schlüsselgrafik 34', die nun einen Schlüsselumriss von der anderen Seite zeigt. Die Bildvorschau zeigt auf dem Display zusätzlich den Schlüssel 10 und das Referenzhilfsobjekt 20. So kann auf einfache Weise der Schlüssel 10 deckungsgleich mit der Schlüsselgrafik 34`, und das Referenzhilfsobjekt 20 deckungsgleich mit der Referenzhilfsobjektgrafik 35 gebracht werden, und dafür das Aufnahmegerät 30 in idealer Weise positioniert werden. Die danach aufgenommenen Fotos/Videos zeigen nun folgende Merkmale des Schlüssels 10:
Die Schlüsselseite 11', die Schlüsselspitze 14, das Schlüsselprofil 16`, die Schlüsselzacken 17, die Schlüsselbohrmulden 18' und den Schlüsselprofilanschnitt 19'. Zudem ist das Referenzhilfsobjekt 20 mit dem Aufdruck 21 auf den Aufnahmen zu sehen, wobei der Aufdruck 21, bedingt durch die Abdeckung des darauf liegenden Schlüssels 10 genauen Aufschluss über die Kontur des Schlüssels 10 gibt.

Im nächsten Schritt des erfindungsgemäßen Verfahrens wird auf dem Display 33 des Aufnahmegerätes 30 abermals eine Anleitungs-Videosequenz abgespielt. Hierbei sind, wie in Figur 3 gezeigt, folgende Handhabungsanweisungen zu sehen: Ein Fixierhilfsobjekt 40 wird dazu verwendet um den Schlüssel 10 lagestabil so zu positionieren, dass die Schlüsselbrust 12 nach oben zeigt. In dem bevorzugten Anwendungsbeispiel wird als Fixierhilfsobjekt 40 eine Rolle Klopapier, oder Küchenpapier verwendet. Es sind aber auch andere Objekte denkbar, die in einem normalen Haushalt zum Einsatz kommen, und es ermöglichen, den Schlüssel 10 so zu fixieren, dass er auf seiner Kante stehend, nicht umfällt. Die Papierlagen des Fixierhilfsobjektes 40 werden mit den Fingern oder unter Zuhilfenahme des Schlüssels 10, so auseinander gedrückt, dass eine Blattlücke 41 entsteht. Nun kann der Schlüssel 10 mit seinem Schlüsselkopf 15 so in diese Blattlücke 41 gesteckt werden, dass der Schlüsselrücken 13 auf der Oberfläche des Fixierhilfsobjektes 40 aufliegt. Die Blätter der Papierrolle wollen automatisch wieder in ihre ursprüngliche Lage zurück, und üben dadurch einen seitlichen Druck auf den Schlüssel 10 aus, wodurch der Schlüssel 10 lagerichtig fixiert wird. Das Referenzhilfsobjekt 20 mit seinem Aufdruck 21 wird auf das Fixierhilfsobjekt 40 neben dem Schlüssel 10 platziert. Nun kann das Aufnahmegerät 30 mit untenliegender Kamera 31 in seiner Lage so positioniert werden, bis sich auf dem Display 33 der Umriss des Fixierhilfsobjektes 40 mit der Fixierhilfsobjektgrafik 36 deckt. Die Schlüsselgrafik 34" zeigt die bevorzugte Position des Schlüssels 10, die Referenzhilfsobjektgrafik 35 zeigt die bevorzugte Position des Referenzhilfsobjektes 20. Sind alle Objekte optimal positioniert, schießt die Kamera 31 Fotos/Videos dieser Szene. Durch eine Verkleinerung/Vergrösserung der Positionierungsgrafik 32" wird der Benutzer angeleitet, das Aufnahmegerät 30 näher oder weiter entfernt vom Schlüssel 10 zu platzieren. Weitere Fotos/Videos aus diesen Positionen ermöglichen es, die Schlüsselzacken 17 in der Schlüsselbrust 12, und weitere Oberflächenstrukturen des Schlüssels 10 besser zu erkennen und auszuwerten.

Figur 4 zeigt den nächsten Schritt des erfindungsgemäßen Verfahrens. Vorab wird in einem Anleitungs-Video auf dem Display 33 die richtige Positionierung des Schlüssels 10 erklärt. Der Schlüsselkopf 15 wird so weit in die Blattlücke 41 des Fixierhilfsobjektes 40 gesteckt, bis nur noch die Schlüsselspitze 14 senkrecht aus dem Fixierhilfsobjekt 40 herausragt. Das Referenzhilfsobjekt 20 mit dem Aufdruck 21 liegt neben dem Schlüssel 10. Auf der Positionierungsgrafik 32‴, gebildet aus der Fixierhilfsobjektgrafik 36, der Schlüsselgrafik 34‴ und der Referenzhilfsobjektgrafik 35 ist abermals ersichtlich, wie man Schlüssel 10, Referenzhilfsobjekt 20, Fixierhilfsobjekt 40, und das Aufnahmegerät 30 positioniert. Die aufgenommenen Fotos/Videos der Kamera 31 geben Aufschluss über das Schlüsselprofil 16, und die Schlüsselspitze 14 des Schlüssels 10. Beispielhaft ist das Aufnahmegerät 30, in zwei anderen Positionen und Winkeln, bezeichnet als 30' und 30" abgebildet. Durch die verschiedenen Aufnahmeperspektiven der Kamera 31 kommt es zu Fotoreihen und Videos, die dazu geeignet sind, das Schlüsselprofil 16 exakt rechtwinklig zu erfassen, und/oder ein 3D-Modell der Oberflächenstruktur des Schlüssels 10 zu erzeugen. Die einzelnen Aufnahmen werden programmgesteuert durch das Aufnahmegerät 30 ausgelöst, sobald die im Aufnahmegerät 30 verbauten Lagesensoren die gewünschte Position detektiert haben.

Figur 5 zeigt den zum Schlüssel 10 passenden Schließzylinder 25, eingebaut in eine Türe, mit dem Zylinderprofil 26. Senkrecht davor ist das Aufnahmegerät 30 mit der Kamera 31 so positioniert, dass die Positionierungsgrafik 32ʺʺ exakt mit dem Schließzylinder 25 übereinstimmt. Lagesensoren im Aufnahmegerät 30 ermitteln die Position, und lösen Fotos oder Videos dann aus, wenn sich das Aufnahmegerät 30 in einer exakt senkrechten Position befindet. Aus diesen Aufnahmen lässt sich das Zylinderprofil 26 ermitteln, das wiederum Aufschluss über das Schlüsselprofil 16 des Schlüssels 10 gibt.

Figur 6 zeigt eine andere erfindungsgemäße Möglichkeit um den Schlüssel 10, senkrecht auf seiner Kante stehend, zu fixieren. Als Fixierhilfsobjekt 42 dient hier eine handelsübliche Wäscheklammer.

Bei dem erfindungsgemäßen Verfahren kann eine Software, entweder intern im Aufnahmegerät 30, oder extern über ein über das Internet verbundenen Rechner, aufgrund der aufgenommenen Fotos/Videos berechnen, ob weitere Aufnahmen des Schlüssels 10 notwendig sind, oder den Vorgang vorzeitig beenden sobald genügend Oberflächendaten über den Schlüssel 10 vorliegen.

Am Ende werden alle erfassten Aufnahmen des Schlüssels 10 an eine Fertigungszentrale gesendet, die aus diesen Aufnahmen ein 3D-Modell des Schlüssels 10 generieren kann, um so Schlüsselkopien zu fertigen.

### Bezugszeichenliste

- 10: Schlüssel
- 11, 11': Schlüsselseite
- 12: Schlüsselbrust
- 13: Schlüsselrücken
- 14: Schlüsselspitze
- 15: Schlüsselkopf
- 16, 16': Schlüsselprofil
- 17: Schlüsselzacken
- 18, 18': Schlüsselbohrmulden
- 19, 19': Schlüsselprofilanschnitt

- 20: Referenzhilfsobjekt
- 21: Aufdruck

- 25: Schließzylinder
- 26: Zylinderprofil

- 30, 30', 30": Aufnahmegerät
- 31: Kamera
- 32, 32', 32", 32‴,32ʺʺ: Positionierungsgrafik
- 33: Display
- 34, 34', 34", 34‴: Schlüsselgrafik
- 35: Referenzhilfsobjektgrafik
- 36: Fixierhilfsobjektgrafik

- 40: Fixierhilfsobjekt
- 41: Blattlücke
- 42: Fixierhilfsobjekt

## Patentansprüche

1. Verfahren zur Aufnahme der Oberfläche eines Schlüssels (10),
**gekennzeichnet durch**
die Schritte:
- Abspielen von Anleitungs-Video/Bildsequenzen auf dem Display (33) eines Aufnahmegerätes (30)
- Anzeigen von Positionierungsgrafiken (32, 32", 32‴, 32ʺʺ) auf dem Display (33) des Aufnahmegerätes (30)
- Ausrichten des Schlüssels (10), des Referenzhilfsobjektes (20), des Fixierhilfsobjektes (40, 42), des Schließzylinders (25), des Aufnahmegerätes (30)
- Aufnahme der Oberfläche des Schlüssels (10), des Referenzhilfsobjektes (20), des Fixierhilfsobjektes (40, 42), des Schließzylinders (25) durch die Kamera (31) des Aufnahmegerätes (30).

2. Verfahren nach Anspruch 1, **dadurch gekennzeichnet, dass** als Aufnahmegerät (30) ein Smartphone, Tablet, oder ein vergleichbares, elektronisches Gerät zum Einsatz kommt.

3. Verfahren nach einem der vorhergehenden Ansprüche, **dadurch gekennzeichnet, dass** das Fixierhilfsobjekt (40) durch eine Klopapierrolle, Küchenpapierrolle, Wäscheklammer, oder andere haushaltsüblichen Gegenstände gebildet wird, die es ermöglichen, den Schlüssel lagerichtig, hochkant zu fixieren.

4. Verfahren nach einem der vorhergehenden Ansprüche, **dadurch gekennzeichnet, dass** das Referenzhilfsobjekt (20) aus einem Geldschein, einer Kreditkarte, einer Geldmünze, einem Ausweisdokument, oder vergleichbaren Alltagsgegenständen mit fixer Größe, fixem Aufdruck besteht.

5. Verfahren nach einem der vorhergehenden Ansprüche, **dadurch gekennzeichnet, dass** der Schlüssel (10) so auf dem Referenzhilfsobjekt (20) positioniert wird, dass Teile des Aufdrucks (21) durch den Schlüssel (10) verdeckt werden.

6. Verfahren nach einem der vorhergehenden Ansprüche, **dadurch gekennzeichnet, dass** der Schlüssel (10) zusammen mit dem Referenzhilfsobjekt (20) durch die Kamera (31) aufgenommen wird.

7. Verfahren nach einem der vorhergehenden Ansprüche, **dadurch gekennzeichnet, dass** auf dem Display (33) die Positionierungsgrafiken (32, 32", 32‴, 32ʺʺ) und/oder die Bildvorschau der Kamera (31) dargestellt werden.

8. Verfahren nach einem der vorhergehenden Ansprüche, **dadurch gekennzeichnet, dass** auf dem Display (33) die Positionierungsgrafiken (32, 32", 32‴, 32ʺʺ) die Bildvorschau der Kamera (31) überlagern.

9. Verfahren nach einem der vorhergehenden Ansprüche, **dadurch gekennzeichnet, dass** die gezeigten Anleitungs-Video/Bildsequenzen auf dem Display (33) des Aufnahmegerätes (30) dazu geeignet sind, dem Anwender zu zeigen, wie er den Schlüssel (10), das Referenzhilfsobjekt (20), das Fixierhilfsobjekt (40, 42) lagerichtig positioniert.

10. Verfahren nach einem der vorhergehenden Ansprüche, **dadurch gekennzeichnet, dass** die Foto/Video-Aufnahmen manuell durch den Benutzer ausgelöst werden, oder automatisch durch eine Software auf dem Aufnahmegerät (30), sobald die im Aufnahmegerät (30) verbauten Fotosensoren und/oder Lagesensoren die optimale Position der Kamera (31) detektiert haben.

11. Verfahren nach einem der vorhergehenden Ansprüche, **dadurch gekennzeichnet, dass** der Schlüssel (10), das Referenzhilfsobjekt (20), das Fixierhilfsobjekt (40) und das Aufnahmegerät (30) in unterschiedlichen Anordnungen positioniert werden, um es der Kamera (31) zu ermöglichen die unterschiedlichen Oberflächen des Schlüssels (10), darunter Schlüsselseite (11, 11'), Schlüsselbrust (12), Schlüsselrücken (13), Schlüsselspitze (14), Schlüsselkopf (15), Schlüsselprofil (16, 16'), Schlüsselzacken (17), Schlüsselbohrmulden (18, 18'), Profilanschnitt (19, 19'), ohne störende Abdeckung abzubilden.

12. Verfahren nach einem der vorhergehenden Ansprüche, **dadurch gekennzeichnet, dass** das Zylinderprofil (26) des Schließzylinders (25) mittels der Kamera (31) des Aufnahmegerätes (30) aufgenommen wird.

13. Verfahren nach einem der vorhergehenden Ansprüche, **dadurch gekennzeichnet, dass** die aufgenommenen Fotos, Videos, Sensordaten an eine Fertigungsstelle übertragen werden, um daraus Schlüsselkopien des Schlüssels (10) zu fertigen.

14. Verfahren nach einem der vorhergehenden Ansprüche, **dadurch gekennzeichnet, dass** eine Software im Aufnahmegerät (30), oder einem verbundenen Computer die Aufnahmen der Kamera (31) überwacht/auswertet.
